(19) Europäisches Patentamt
European Patent Office
Office européen des brevets

(11) Veröffentlichungsnummer: **0 417 545 B1**

(12) **EUROPÄISCHE PATENTSCHRIFT**

(45) Veröffentlichungstag der Patentschrift: **01.06.94**

(51) Int. Cl.5: **C08G 65/44**

(21) Anmeldenummer: **90116549.8**

(22) Anmeldetag: **29.08.90**

Die Akte enthält technische Angaben, die nach dem Eingang der Anmeldung eingereicht wurden und die nicht in dieser Patentschrift enthalten sind.

# (54) Verfahren zur Herstellung von Polyphenylenethern mit ausgewählten Aminen.

(30) Priorität: **09.09.89 DE 3930094**

(43) Veröffentlichungstag der Anmeldung:
**20.03.91 Patentblatt 91/12**

(45) Bekanntmachung des Hinweises auf die Patenterteilung:
**01.06.94 Patentblatt 94/22**

(84) Benannte Vertragsstaaten:
**BE DE ES FR GB NL**

(56) Entgegenhaltungen:
**EP-A- 0 103 154**
**EP-A- 0 113 430**

(73) Patentinhaber: **BASF Aktiengesellschaft**
**Carl-Bosch-Strasse 38**
**D-67063 Ludwigshafen(DE)**

(72) Erfinder: **Hedtmann-Rein, Carola, Dr.**
**Winzerweg 1**
**D-6945 Hirschberg(DE)**
Erfinder: **Ostermayer, Bertram, Dr.**
**Zeppelinstrasse 179**
**D-6900 Heidelberg(DE)**
Erfinder: **Czauderna, Bernhard, Dr.**
**Kapellenweg 34**
**D-6945 Hirschberg(DE)**
Erfinder: **Feldmann, Heike, Dr.**
**B 4,2**
**D-6800 Mannheim 1(DE)**
Erfinder: **Muehlbach, Klaus, Dr.**
**Dr.-Heinrich-Winter-Strasse 19**
**D-6148 Heppenheim(DE)**
Erfinder: **Baumgartner, Ehrenfried, Dr.**
**Goethestrasse 1**
**D-6701 Roedersheim-Gronau(DE)**

EP 0 417 545 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein verbessertes Verfahren zur Herstellung hochmolekularer Polyphenylenether aus einwertigen Phenolen, die in beiden ortho-Stellungen oder zusätzlich in einer meta-Position, nicht aber in para-Stellung Alkyl- oder Aryl-Substituenten aufweisen, durch oxidative Kupplungsreaktion mit Sauerstoff bei Temperaturen zwischen 10 und 60 °C in Anwesenheit eines Katalysatorsystems aus Kupfersalzen und organischen Aminen in Gegenwart eines aromatischen $C_6$- bis $C_{10}$-Kohlenwasserstoffs als Lösungsmittel und Aufarbeitung der erhaltenen Polykondensatlösungen.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen. Polyphenylenether und Verfahren zu ihrer Herstellung sind an sich bekannt und in den zahlreichen Veröffentlichungen, z.B. US 3,306,874, US 3,306,875, US 3,914,266, DE-A 20 11 709, EP-A 111 722, US 3,642,699, DE-A 22 28 071, DE-A 24 60 326, DE-A 27 38 889 und M. Bartmann et al Makromol. Chem. 189, S. 2285-2292 (1988) sowie EP-A-103 154 beschrieben.

Die bisherigen Reaktionswege weisen jedoch den Nachteil auf, daß bei der oxidativen Polykondensation zur Herstellung höhermolekularer Kondensate zu lange Reaktionszeiten erforderlich sind und daß zu viele unerwünschte Nebenprodukte, z.B. Chromophore und N-haltige Verbindungen, entstehen.

Der Erfindung lag daher die Aufgabe zugrunde, ein Amin-Kupferkatalysatorsystem zu finden, daß bei relativ kurzen Reaktionszeiten hochmolekulare Polymere mit vergleichsweise wenigen Nebenprodukten liefert.

Demgemäß wurde ein Verfahren zur Herstellung hochmolekularer Polyphenylenether aus einwertigen Phenolen, die in beiden ortho-Stellungen oder zusätzlich in einer meta-Position, nicht aber in para-Stellung Alkyl- oder Aryl-Substituenten aufweisen, durch oxidative Kupplungsreaktion mit Sauerstoff bei Temperaturen zwischen 10 und 60 °C in Anwesenheit eines Katalysatorsystems aus Kupfersalzen und organischen Aminen in Gegenwart eines aromatischen $C_6$- bis $C_{10}$-Kohlenwasserstoffs als Lösungsmittel und Aufarbeitung der erhaltenen Polykondensatlösung gefunden, das dadurch gekennzeichnet ist, daß als Katalysatorsystem eine Mischung enthaltend

a) Kupfer-(I)-bromid als Kupfersalz,
b) N,N' -Di-tertiärbutylethylendiamin und
c) Amine der allgemeinen Formel I oder II

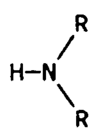 (I) ; 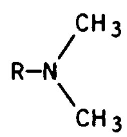 (II)

in denen R $C_4$-$C_6$ n-Alkyl bedeutet, eingesetzt wird, wobei die Molverhältnisse a:b, a:c und b:c innerhalb folgender Bereiche liegen:

a:b = 1:0,18 bis 1:2,5
a:c = 1:24 bis 1:60
b:c = 1:135 bis 1:24

Als Kupfersalz des Katalysatorsystems wird insbesondere Kupfer-I-bromid verwendet. Dieses kann geringe Anteile u.z. bis zu 1 Gew.-% an anderen Kupfersalzen wie Kupferoxid und Kupfersulfat enthalten, wobei geringe Mengen an anderen Metallverbindungen z.B. des Natriums oder Eisens üblicherweise enthalten sein können.

Für die Zwecke des erfindungsgemäßen Verfahrens kommt als Aminkomponente b) ausschließlich N,N'-Di-tert.-butylethylendiamin in Betracht.

Als Komponente c) enthält das Katalysatorsystem des erfindungsgemäßen Verfahrens sekundäre oder tertiäre Amine der obigen Formeln I bzw. II, wobei keine Mischungen aus I und II verwendet werden.

Unter sekundären Aminen der Formel I werden solche verstanden, in denen R einen $C_4$- bis $C_6$-n-Alkylrest bedeutet. Bevorzugt werden Di-n-butylamin, Di-n-pentylamin oder Di-n-hexylamin oder Mischungen dieser Amine eingesetzt.

Es können aber auch unsymmetrische sekundäre Amine verwendet werden wie N-Butylpentylamin, N-Butylhexylamin und N-Pentylhexylamin.

Die tertiären Amine der allgemeinen Formel II enthalten als Rest R eine $C_4$- bis $C_6$-Alkylgruppe, wobei N,N-Dimethylbutylamin und N,N-Dimethylhexylamin bevorzugt sind.

Erfindungswesentlich sind die Molverhältnisse der drei Katalysatorkomponenten, die innerhalb folgender Grenzen liegen:

a:b = 1:0,18 bis 1:2,5, bevorzugt 1:0,29 bis 1:1,
a:c = 1:24 bis 1:60, bevorzugt 1:40 bis 1:60,
b:c = 1:135 bis 1:24, bevorzugt 1:135 bis 1:60.

Insbesondere bei geringen Anteilen des Diamins (b) in der Katalysatormischung (bezogen auf das Verhältnis b:c) verringern sich die Anteile der unerwünschten Nebenprodukte erheblich, so daß die Farbqualität der hochmolekularen Polyphenylenether deutlich verbessert wird.

Eine besonders bevorzugte Ausführungsform des erfindungsgemäßen Verfahrens besteht in der Verwendung einer weiteren Verbindung im Katalysatorsystem, die Halogenidionen, bevorzugt Bromid, enthält.

Geeignete Halogenidverbindungen sind Bromwasserstoffsäure, Natriumbromid Tetraalkylammoniumbromid oder Tetralkylammoniumchlorid, welches 1 bis 12 Kohlenstoffatome in der Alkylkette aufweisen kann. Bevorzugt ist Bromwasserstoffsäure, welche meist in Form einer 30 bis 50 gew.-%igen wäßrigen Lösung eingesetzt wird.

Das Molverhältnis der Aminkomponente (c) zu Bromid beträgt im allgemeinen 25:1 bis 150:1, bevorzugt 50:1 bis 125:1; entsprechend einem Molverhältnis von Kupfer zu Bromid von 0,42:1 bis 6,25:1, bevorzugt 0,83:1 bis 3,13:1.

Unter hochmolekularen Polyphenylenethern werden durch oxidative Kupplung von Alkyl- oder auch Arylphenolen zu einer Kette alkyl- oder arylsubstituierter, in para-Stellung durch Sauerstoffatome etherartige gebundene Benzolringe verstanden. Die Polymeren weisen im allgemeinen Molekulargewichte $\overline{M}_w$ von 15 000 bis 90 000, bevorzugt 20 000 bis 60 000 auf.

Hochmolekulare Polyphenylenether sind an sich aus der Literatur, z.B. aus A.S. Hay, Polym. Eng. Sci., 16 (1976) 1 und A.S. Hay, J. Org. Chem., 28 (1963) 1300 seit längerem bekannt, so daß sich hier eine weitere Beschreibung erübrigt.

Die zur Herstellung der hochmolekularen Polyphenylenether verwendeten einwertigen Phenole, die in den beiden ortho-Stellungen oder zusätzlich in einer meta-Position, nicht aber in der para-Stellung Alkyl- oder Arylsubstituenten aufweisen, sind im allgemeinen übliche Phenole wie 2,6-Di-methylphenol, 2,6-Diethylphenol, 2,6-Diphenylphenol, 2-Methyl-6-ethylphenol, 2-Methyl-6-propylphenol, 2,6-Dibutylphenol, 2,3,6-Trimethylphenol sowie Gemische dieser Phenole. Besonders bevorzugt wird das 2,6-Dimethylphenol, das nach den in Houben-Weyl, Methoden der organischen Chemie, Phenole, Teil 2, Bd. 6/1c, Georg-Thieme-Verlag, Stuttgart, 1976, Seite 1186ff beschriebenen Methoden von den bei der Polykondensation störenden Phenolen, wie Phenol, o- und m-Kresol und den mehrkernigen Phenolen, wie 2,6-Dimethyl-1-hydroxydiphenyl, abgetrennt wird.

Zur Ausführung der Polykondensation wird üblicherweise Sauerstoff in die 10 bis 60 °C, vorzugsweise 25 bis 50 °C warme Lösung des Monomeren in Gegenwart eines Katalysatorkomplexes eingeleitet. Es kann auch Luft verwendet werden, jedoch ist dann die Reaktionszeit entsprechend länger. Die Sauerstoffdurchflußgeschwindigkeit beträgt 0,4 bis 100 l/h, bevorzugt 5 bis 50 l/h. Dabei werden die Amine üblicherweise in Mengen von 5 bis 50 mol-%, bezogen auf das eingesetzte Phenol, vorzugsweise in Mengen von 15 bis 35 mol-% eingesetzt. Die Konzentration der Kupfersalze wird gering gehalten und variiert von 0,1 bis 0,9 mol pro 100 mol des Monomeren, bevorzugt 0,4 bis 0,6 mol. Das Gewichtsverhältnis des Lösungsmittels liegt üblicherweise im Bereich 3:1 bis 9:1, bezogen auf das Gewicht des Monomeren. Bevorzugt wird hier ein Verhältnis von 4:1 bis 7:1 eingesetzt. Als Lösungsmittel eignen sich aromatische $C_6$- bis $C_{10}$-Kohlenwasserstoffe, insbesondere Toluol, Ethylbenzol, Xylol, Diethylbenzol oder deren Gemische, wobei vorzugsweise Toluol verwendet wird.

Zur Aufarbeitung der erhaltenen Polykondensatlösung wird nach Beendigung der Polykondensation nach üblichen Verfahren die Reaktion z.B. durch Zugabe von wäßriger Ethylendiamintetraessigsäuredinatriumsalzlösung abgestoppt und gleichzeitig wird die Metallkomponente durch Komplexbildung in die wäßrige Phase überführt und durch anschließende Abtrennung derselben entfernt. Aus der erhaltenen Polyphenylenetherlösung kann das Polymere nach üblichen Verfahren, z.B. durch Ausfällen mit Methanol abgetrennt werden. Bevorzugt ist aber ein Mehrstufenverdampfungsverfahren, bei dem das Lösungsmittel durch Verdampfen entfernt wird.

Die mit der Erfindung erzielten Vorteile bestehen insbesondere darin, daß man ein Polykondensat mit relativ hoher reduzierter spezifischer Viskosität, d.h. hohem Molekulargewicht in kurzer Zeit erhält, wobei durch den Einsatz des erfindungsgemäß ausgewählten Kupferkatalysatorkomplexes Polyphenylenether hergestellt werden, welche eine geringe Färbung, bestimmt durch die Farbzahl nach Hazen, gemäß ISO 6271 aufweisen.

Die erhaltenen Polyphenylenether können alleine oder im Gemisch mit anderen Polymeren, insbesondere mit Styrolpolymerisaten, nach üblichen Methoden zu Formteilen verarbeitet werden.

In den folgenden Beispielen wurde die reduzierte spezifische Viskosität $\eta_{red.}$ bei 25 °C in Chloroform (0,5 g Produkt/100 ml Chloroform) gemessen.

Der Gehalt an Nebenprodukten (bezogen auf eingesetztes Monomer) wurde nach Abtrennung mittels HPLC anhand der UV-Absorptionsmaxima bestimmt:

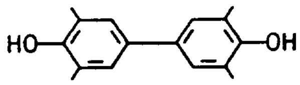

$H_2$ DPQ $\lambda_{max}$ = 270 nm

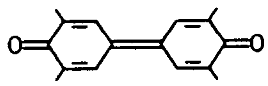

DPQ $\lambda_{max}$ = 420 nm

Die Bestimmung der Farbzahl nach Hazen erfolgte nach ISO 6271 aus einer Lösung in Toluol (1 g Produkt/100 ml Toluol) an einer Mischung aus 60 Gew.-% Polyphenylenether und 40 Gew.-% schlagfestem Polystyrol (HIPS), welches 8 Gew.-% Butadien enthielt (MFI = 5,5 g/10 min bei 200 °C und 5 kg Belastung).

Beispiel 1

0,95 kg (6,62 mol) Cu-(I)-Br(a) und eine konstante Summe von 400 mol Di-n-Butylamin (c) und N,N'-Di-tert.-butylethylendiamin (b) wurden in 780,2 kg (8468 mol) Toluol in einem Kreislaufreaktorsystem gemäß EP-A 287 670 unter Stickstoff vorgelegt. Bei 25, 30 und 35 °C wurden 160 l (1268 mol) 2,6 Dimethylphenol innerhalb einer Stunde unter Sauerstoffbegasung zur Reaktionslösung zugetropft. Die Gesamtbegasungszeit betrug zwischen 75 und 120 min bei einer Sauerstoffmenge von 0,5 bis 20 $cm^3/h$. Die jeweils notwendige Sauerstoffmenge richtete sich nach dem Sauerstoffverbrauch während der Reaktion, wobei der Sauerstoffbedarf mittels einer Sonde ermittelt wurde.

Nach beendeter Polykondensation wurde die Reaktion mit 120 l (36 mol) 10 %iger wäßriger Ethylendiamintetraessigsäuredinatriumsalzlösung abgestoppt und die entstandene Lösung mit 31,5 l (22 mol) 7 %iger wäßriger Natriumhydrogensulfitlösung stabilisiert. Die wäßrige Phase wurde bei 70 bis 80 °C abgetrennt und das Lösungsmittel durch Verdampfen entfernt.

Tabelle 1

| Versuch Nr. | Gehalt (b) [mol] | Gehalt (c) [mol] | Reaktions-temperatur [°C] | Gesamtbegasungs-zeit [min] | $\eta_{red.}$ [dl/g] | $\sum (H_2)$ DPQ [Gew.-%] | Farbzahl nach Hazen |
|---|---|---|---|---|---|---|---|
| 1 | 3 | 397 | 25 | 85 | 0,61 | 0,49 | 115 |
| 2 | 6,03 | 393,97 | 25 | 85 | 0,54 | 0,41 | 110 |
| 3 | 15,19 | 384,81 | 25 | 85 | 0,52 | 0,33 | 105 |
| 4 | 3 | 397 | 30 | 100 | 0,49 | 0,41 | 120 |
| 5 | 3 | 397 | 35 | 115 | 0,59 | 0,35 | 130 |
| 6* | - | 400 | 25 | 106 | 0,59 | 1,1 | 185 |
| 7* | 1,5 | 398,5 | 25 | 100 | 0,56 | 0,58 | 150 |
| 8* | 30 | 369,2 | 25 | 80 | 0,50 | 0,35 | 110 |
| 9* | 171,4 | 228,6 | 25 | 75 | 0,55 | 0,70 | 160 |
| 10* | 374 | 26 | 25 | 90 | 0,51 | 1,15 | 180 |
| 11* | 400 | - | 25 | 120 | 0,48 | 0,8 | 175 |

* zum Vergleich

Beispiel 2

Auf die im Versuch 1, Beispiel 1, angegebene Weise, wurden Polyphenylenether hergestellt, wobei jedoch die Zulaufzeit des Monomeren variiert wurde.

Zusätzlich wurde bei einem Teil der Versuche die Reaktionstemperatur 1 Stunde vor Beendigung der Zulaufzeit auf 50 °C erhöht (Tempern der Reaktionsmischung).

Tabelle 2

| Versuch Nr. | Reaktions-temperatur [°C] | Zulaufzeit [h] | Tempern | Gesamtbegasungs-zeit [min] | $\eta_{red.}$ [dl/g] | $\sum (H_2)$ DPQ [Gew.-%] | Farbzahl nach Hazen |
|---|---|---|---|---|---|---|---|
| 1 | 25 | 1 | - | 85 | 0,61 | 0,49 | 115 |
| 2 | 25 | 2 | - | 182 | 0,58 | 0,40 | 115 |
| 3 | 25 | 2 | + | 180 | 0,53 | 0,11 | 135 |
| 4 | 25 | 3 | - | 240 | 0,57 | 0,28 | 110 |
| 5 | 25 | 3 | + | 244 | 0,55 | 0,09 | 140 |
| 6 | 25 | 5 | - | 330 | 0,50 | 0,19 | 110 |
| 7 | 25 | 5 | + | 350 | 0,51 | 0,10 | 140 |
| 8 | 30 | 1 | - | 100 | 0,49 | 0,41 | 120 |
| 9 | 30 | 2 | - | 175 | 0,53 | 0,33 | 120 |
| 10 | 30 | 2 | + | 180 | 0,50 | 0,10 | 150 |
| 11 | 30 | 3 | - | 210 | 0,55 | 0,19 | 125 |
| 12 | 30 | 3 | + | 225 | 0,54 | 0,08 | 150 |
| 13 | 35 | 1 | - | 115 | 0,59 | 0,35 | 130 |
| 14 | 35 | 2 | - | 150 | 0,50 | 0,16 | 130 |
| 15 | 35 | 3 | - | 210 | 0,46 | 0,13 | 135 |

Beispiel 3

Auf die in Beispiel 1 beschriebene Weise wurden Polyphenylenether hergestellt, jedoch wurden zur Katalysatormischung vor Reaktionsbeginn 0,58 kg (3,4 mol) einer 47 %igen wäßrigen HBr-Lösung zugegeben.

Tabelle 3

| Versuch Nr. | Gehalt (b) [mol] | Gehalt (c) [mol] | Reaktionstemperatur [°C] | Zulaufzeit [h] | Tempern | Gesamtbegasungszeit [min] | $\eta_{red.}$ [dl/g] | $\sum (H_2)$ DPQ [Gew.-%] |
|---|---|---|---|---|---|---|---|---|
| 1* | - | 400 | 25 | 1 | - | 92 | 0,52 | 1,00 |
| 2 | 3 | 397 | 25 | 1 | - | 78 | 0,54 | 0,52 |
| 3 | 3 | 397 | 25 | 2 | - | 170 | 0,55 | 0,39 |
| 4 | 3 | 397 | 25 | 2 | + | 175 | 0,50 | 0,12 |
| 5 | 3 | 397 | 25 | 3 | - | 230 | 0,56 | 0,30 |
| 6 | 3 | 397 | 25 | 3 | + | 245 | 0,59 | 0,09 |
| 7 | 3 | 397 | 20 | 2 | - | 176 | 0,54 | 0,45 |
| 8 | 3 | 397 | 20 | 2 | + | 180 | 0,56 | 0,15 |
| 9 | 3 | 397 | 20 | 3 | - | 240 | 0,60 | 0,31 |
| 10 | 3 | 397 | 20 | 3 | + | 240 | 0,56 | 0,08 |
| 11 | 6,03 | 393,97 | 25 | 2 | + | 175 | 0,51 | 0,07 |

* zum Vergleich

Beispiel 4

0,29 g (0,002 mol) CuBr und eine Summe von 0,05 mol sekundäres bzw. tertiäres Amin (c) und N,N'-Di-tert.-butylethylendiamin (b) wurden in 280 g (3,04 mol) Toluol 10 min bei 25 °C mit 1000 U/min gerührt. Bei dieser Temperatur wurden 61,1 g (0,5 mol) 2,6-Dimethylphenol in 61,1 g (0,66 mol) Toluol innerhalb einer Stunde unter $O_2$-Begasung (50 l/h) zugetropft. Die Gesamtbegasungszeit war vom verwendeten Aminsystem abhängig.

Nach beendeter Polykondensation wurde die Reaktion mit 16,8 g (0,005 mol) 10 %iger wäßriger Ethylendiamintetraessigsäuredinatriumsalzlösung und 1,3 g (0,005 mol) 40 %iger wäßriger $NaHSO_3$-Lösung abgestoppt und die entstandene Lösung stabilisiert. Die wäßrige Phase wurde bei 70 bis 80 °C abgetrennt und das Lösungsmittel durch Abdampfen entfernt.

Tabelle 4

| Versuch Nr. | Komponente (c) | Gehalt (b) [mol-%] | Gesamtbegasungszeit [h] | $\eta_{red.}$ [dl/g] | $\sum (H_2)$ DPQ [Gew.-%] |
|---|---|---|---|---|---|
| 1* | N,N-Dimethylbutylamin | - | 5 | 0,20 | 0,90 |
| 2 | " | 2 | 4,5 | 0,55 | 0,45 |
| 3 | " | 4 | 3 | 0,51 | 0,34 |
| 4* | " | 6 | 2,5 | 0,54 | 0,37 |
| 5* | " | 8 | 2 | 0,55 | 0,46 |
| 6* | " | 17 | 2 | 0,66 | 0,48 |
| 7* | " | 100 | 3 | 0,48 | 0,84 |
| 8 | N,N-Dimethylhexylamin | 4 | 1,5 | 0,67 | 0,60 |
| 9 | Di-n-pentylamin | 4 | 1,5 | 0,58 | 0,55 |
| 10 | Di-n-hexylamin | 4 | 2 | 0,59 | 0,52 |

* zum Vergleich

Beispiel 5 (zum Vergleich)

0,042 g (0,0003 mol) Kupfer-(I)-oxid, 0,91 g (0,0054 mol) einer 48 %igen wäßrigen HBr-Lösung, 25 g (0,78 mol) Methanol (5,3 Gew.-% Wassergehalt), 1,2 g (0,012 mol) Butyldimethylamin, 0,62 g (0,0048 mol) Di-n-butylamin, 0,2 g (0,0011 mol) N,N'-Di-tert.-butylethylendiamin und 0,06 g (0,00015 mol) Tricaprylmethylamoniumchlorid wurden in 280 g (3,04 mol) Toluol 10 min bei 25 °C mit 1000 U/min gerührt. 61,1 g (0,5 mol) 2,6-Di-methylphenol gelöst in 61,1 g (0,66 mol) Toluol wurden innerhalb einer Stunde unter $O_2$-Begasung (50 l/h) zur Reaktionslösung zugetropft.

Die Gesamtbegasungszeit betrug 3 Stunden. Nach beendeter Polykondensation wurde die erhaltene Reaktionslösung auf die in Beispiel 4 beschriebene Weise aufgearbeitet.

$\eta_{red.}$ (PPE) = 0,55 dl/g;

$\Sigma$ ($H_2$) DPQ = 0,80 Gew.-% bezogen auf das eingesetzte 2,6 Dimethylphenol.

Beispiel 6 (zum Vergleich)

Auf die in Beispiel 5 beschriebene Weise wurden Polyphenylenether hergestellt, wobei das Katalysatorsystem statt Kupferoxid und HBr 0,29 g (0,002 mol) Cu-(I)-Br enthielt.

$\eta_{red.}$ (PPE) = 0,69 dl/g;

$\Sigma$ ($H_2$) DPQ = 0,91 Gew.-% bezogen auf das eingesetzte 2,6 Dimethylphenol.

Beispiel 7 (zum Vergleich)

0,56 g (0,0033 mol) $CuCl_2 \cdot 2H_2O$, 22 g (0,17 mol) Di-n-butylamin, 0,56 g (0,0033 mol) N,N'-Di-tert.-butylethylendiamin und 100 g Methanol wurden in 180 g Toluol (1,95 mol) 10 min bei 25 °C mit 1000 U/min gerührt. Bei dieser Temperatur wurden 61,1 g (0,5 mol) 2,6-Dimethylphenol in 61,1 g (0,66 mol) Toluol innerhalb 1 Stunde unter $O_2$-Begasung (50 l/h) zugetropft. Die Gesamtbegasungszeit betrug 4 h. Die Aufarbeitung erfolgte analog der Arbeitsweise in Beispiel 4.

$\eta_{red.}$ (PPE) = 0,49 dl/g;

$\Sigma$ ($H_2$) DPQ = 0,61 Gew.-% bezogen auf das eingesetzte 2,6 Dimethylphenol.

Beispiel 8 (zum Vergleich)

0,29 g (0,002 mol) CuBr und eine Summe von 0,05 mol Di-n-butylamin (c) und einem Diamin (d) wurden in 280 g (3,04 mol) Toluol 10 min bei 25 °C mit 1000 U/min gerührt und analog der Arbeitsweise von Beispiel 4 umgesetzt und aufgearbeitet.

Tabelle 5

| Versuch Nr. | Komponente (d) | Gehalt (d) [mol-%] | Begasungsz. [h] | $\eta_{red.}$ [dl/g] | $\Sigma$ ($H_2$) DPQ [Gew.-%] |
|---|---|---|---|---|---|
| 1 | 2,2'-Bipyridin | 4 | 5 | -$^{+)}$ | -$^{+)}$ |
| 2 | N,N,N',N'-Tetrahexamethylendiamin | 4 | 5 | 0,18 | 0,75 |
| 3 | N,N'-Dimethylethylendiamin | 4 | 5 | 0,21 | 0,96 |

$^{+)}$ keine Reaktion

**Patentansprüche**

1. Verfahren zur Herstellung hochmolekularer Polyphenylenether aus einwertigen Phenolen, die in beiden ortho-Stellungen oder zusätzlich in einer meta-Position, nicht aber in para-Stellung Alkyl- oder Aryl-Substituenten aufweisen, durch oxidative Kupplungsreaktion mit Sauerstoff bei Temperaturen zwischen 10 und 60 °C in Anwesenheit eines Katalysatorsystems aus Kupfersalzen und organischen Aminen in Gegenwart eines aromatischen $C_6$- bis $C_{10}$-Kohlenwasserstoffs als Lösungsmittel und Aufarbeitung der erhaltenen Polykondensatlösung, dadurch gekennzeichnet, daß als Katalysatorsystem eine Mischung, enthaltend
   a) Kupfer-(I)-bromid als Kupfersalz,

b) N,N'-Di-tert.-butylethylendiamin und
c) Amine der allgemeinen Formel I oder II

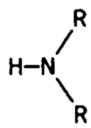 (I) ; 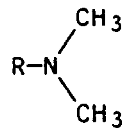 (II)

in denen R $C_4$-$C_6$ n-Alkyl bedeutet, eingesetzt wird, wobei die Molverhältnisse a:b, a:c und b:c innerhalb folgender Bereiche liegen:
a:b = 1:0,18 bis 1:2,5
a:c = 1:24 bis 1:60
b:c = 1:135 bis 1:24

**2.** Verfahren nach Anspruch 1, dadurch gekennzeichnet, daß die Molverhältnisse a:b, a:c und b:c innerhalb folgender Bereiche liegen:
a:b = 1:0,29 bis 1: 1
a:c = 1:40 bis 1:60
b:c = 1:135 bis 1:60

**3.** Verfahren nach mindestens einem der Ansprüche 1 und 2, dadurch gekennzeichnet, daß als Aminkomponente (Formel (I)) Di-n-butylamin, oder Di-n-pentylamin oder Di-n-hexylamin oder deren Mischungen eingesetzt wird.

**4.** Verfahren nach mindestens einem der Ansprüche 1 bis 3, dadurch gekennzeichnet, daß als Aminkomponente (Formel (II)) N,N-Dimethylbutylamin oder N,N-Dimethylpentylamin- oder N,N-Dimethylhexylamin oder deren Mischungen eingesetzt wird.

**5.** Verfahren nach mindestens einem der Ansprüche 1 bis 4, dadurch gekennzeichnet, daß ein Katalysatorsystem eingesetzt wird, welches neben den Komponenten a, b und c noch eine weitere Halogenidverbindung enthält, wobei das Molverhältnis des Amins der allgemeinen Formel I oder II zu Halogenid im Bereich von 25:1 bis 150:1 liegt.

**6.** Verfahren nach Anspruch 5, dadurch gekennzeichnet, daß die Halogenidverbindung HBr oder NaBr oder Tetraalkylammoniumbromid ist.

## Claims

**1.** A process for preparing high molecular weight polyphenylene ethers from monohydric phenols which have alkyl or aryl substituents in both ortho positions or additionally in one meta position but not in the para position by an oxidative coupling reaction with oxygen at from 10 to 60 °C in the presence of a catalyst system composed of copper salts and organic amines in the presence of an aromatic $C_6$- to $C_{10}$-hydrocarbon as solvent and workup of the resulting polycondensate solution, which comprises using as catalyst system a mixture containing
a) copper(I) bromide as copper salt,
b) N,N'-di-tert-butylethylenediamine and
c) amines of the formula I or II

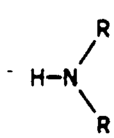 (I) ; 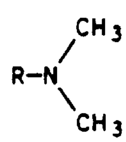 (II)

where R is $C_4$-$C_6$ n-alkyl, and where the molar ratios a:b, a:c and b:c are within the following ranges:
a:b = 1:0.18 to 1:2.5
a:c = 1:24 to 1:60

b:c = 1:135 to 1:24

**2.** A process as claimed in claim 1, wherein the molar ratios a:b, a:c and b:c are within the following ranges:

a:b = 1:0.29 to 1:1
a:c = 1:40 to 1:60
b:c = 1:135 to 1:60

**3.** A process as claimed in at least one of claims 1 and 2, wherein di-n-butylamine or di-n-pentylamine or di-n-hexylamine or mixtures thereof is used as amine component (formula (I)).

**4.** A process as claimed in at least one of claims 1 to 3, wherein N,N-dimethylbutylamine or N,N-dimethylpentylamine or N,N-dimethylhexylamine or mixtures thereof is used as amine component (formula (II)).

**5.** A process as claimed in at least one of claims 1 to 4, wherein a catalyst system which, besides components a, b and c, also contains another halide compound, where the molar ratio of the amine of the formula I or II to the halide is in the range from 25:1 to 150:1, is used.

**6.** A process as claimed in claim 5, wherein the halide compound is HBr or NaBr or tetraalkylammonium bromide.

**Revendications**

**1.** Procédé de fabrication de poly(éthers phényléniques) au départ de phénols monohydroxylés, qui présentent, dans les deux positions ortho, ou supplémentairement en une position métha mais cependant pas en position para, des substituants alkyle ou aryle, par une réaction de couplage oxydante avec de l'oxygène à des températures comprises entre 10 et 60 °C et en présence d'un système catalytique à base de sels de cuivre et d'amines organiques, en présence d'un hydrocarbure aromatique en $C_6$ à $C_{10}$ servant de solvant et le traitement de la solution du produit de polycondensation ainsi obtenu, caractérisé en ce que l'on utilise, à titre de système catalytique, un mélange qui contient

a) du bromure de cuivre-(I) à titre de sel de cuivre,
b) de la N,N'-di-tert-butyléthylènediamine et
c) des amines de la formule générale I ou II

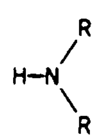 (I) ; 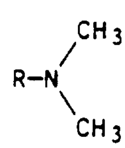 (II)

formules dans lesquelles R représente un radical n-alkyle en $C_4$ à $C_6$, où les rapports molaires a:b, a:c et b:c se situent entre les limites suivantes :

a:b = 1:0,18 à 1:2,5
a:c = 1:24 à 1:60
b:c = 1:135 à 1:24.

**2.** Procédé suivant la revendication 1, caractérisé en ce que les rapports molaires a:b, a:c et b:c se situent entre les limites suivantes :

a:b = 1:0,29 à 1:1
a:c = 1:40 à 1:60
b:c = 1:135 à 1:60.

**3.** Procédé suivant au moins l'une des revendications 1 et 2, caractérisé en ce que, à titre de composant du type amine (formule (I)), on utilise la di-n-butylamine, la di-n-pentylamine, ou la di-n-hexylamine, ou des mélanges de celles-ci.

4. Procédé suivant l'une au moins des revendications 1 à 3, caractérisé en ce que, à titre de composant du type amine (formule (II)), on utilise la N,N-diméthylbutylamine, ou la N,N-diméthylpentylamine, ou la N,N-diméthylhexylamine, ou des mélanges de celles-ci.

5. Procédé suivant l'une au moins des revendications 1 à 4, caractérisé en ce que l'on utilise un système catalytique qui, outre les composants a, b et c, contient encore un composé du type halogénure supplémentaire, où le rapport molaire de l'amine de la formule générale I ou II à l'halogénure fluctue dans la plage de 25:1 à 150:1.

6. Procédé suivant la revendication 5, caractérisé en ce que le composé du type halogénure est HBr ou NaBr ou un bromure de tétraalkylammonium.